# EUROPÄISCHE PATENTANMELDUNG

(11) **EP 4 488 433 A1**
(43) Veröffentlichungstag der Anmeldung: **08.01.2025**
(21) Anmeldenummer: 24180754.4
(22) Anmeldetag: 07.06.2024
(51) Int. Cl.: D04B 1/14, D04B 1/16, D04B 1/22

(54) **ROHRARTIGE RUNDMASCHENWARE UND VERFAHREN HIERZU**

(30) Priorität: 04.07.2023 DE 102023117645
(71) Anmelder: Buck, Alfred, 71149 Bondorf (DE)
(72) Erfinder: Buck, Alfred, 71149 Bondorf (DE)
(74) Vertreter: Sebastian, Jens

(57) **Zusammenfassung**

Der Gegenstand der vorliegenden Erfindung betrifft ein Verfahren zur Herstellung einer als rohrartige Schutzhülse und/oder -hülle, insbesondere einer rohrartigen Baumschutzhülse und/oder -hülle, ausgebildeten Rundmaschenware, wobei die Schutzhülse bzw. die Rundmaschenware als ein Rundgestrick, ein Rundgeflecht, ein Rundgewebe und/oder ein Rundgewirk ausgebildet wird, umfassend die Schritte: Rundstricken, Rundflechten, Rundweben und/oder Rundwirken mindestens einer Naturfaser, insbesondere eine Flachs-, Hanf-, Baumwolle und/oder Viskose-Naturfaser zu einem Rundgestrick, Rundgeflecht, Rundgewebe bzw. Rundgewirk, Verfestigen des Rundgestricks, Rundgeflecht, Rundgewebe bzw. Rundgewirk mittels Hinzufügen eines kompostierbaren Verfestigungsmaterials, insbesondere mittels Hinzufügen eines Harzes, eines Thermoplasts, Lignin oder PLA, sodass aus dem Naturfaser-Rundgestrick, Naturfaser-Rundgeflecht, Naturfaser-Rundgewebe bzw. Naturfaser-Rundgewirk ein verstärktes und/oder verfestigtes rohrartiges Rundgestrick, Rundgeflecht, Rundgewebe bzw. Rundgewirk realisiert wird, wobei das Zufügen des Verfestigungsmaterials zu der Naturfaser vor oder während des Rundstrickens, Rundflechten, Rundwebens bzw. Rundwirkens erfolgt, sodass ein Mischrundgestrick, Mischrundgeflecht, Mischrundgewebe bzw. Mischrundgewirk aus Naturfaser und Verfestigunsgmaterial erzeugt wird. Weiter betrifft die Erfindung eine Schutzhülle, ein Verfahren, eine Rundmaschenware sowie eine Vorrichtung hierzu.

## Beschreibung

Die Erfindung betrifft ein Verfahren zur Herstellung einer rohrartigen Rundmaschenware wie einem Rundgestrick, einem Rundgeflecht, einem Rundgewebe und/oder einem Rundgewirk gemäß Anspruch 1.

Auch betrifft die Erfindung eine rohrartige Rundmaschenware gemäß Anspruch 7.

Zudem betrifft die Erfindung eine Schutzhülle, gemäß Anspruch 8.

Weiter betrifft die Erfindung ein Verfahren zum Schutz von Bäumen, gemäß Anspruch 9.

Nicht zuletzt betrifft die Erfindung eine Vorrichtung zum Herstellen einer rohrartigen Rundmaschenware gemäß Anspruch 11.

Rundmaschenware wie Rundgestricke, Rundgeflechte, Rundgewebe oder Rundgewirke sind allgemein bekannt. Auch Baumschutzhüllen sind allgemein aus dem Stand der Technik bekannt.

So ist beispielsweise aus der DE 10 2010 017 773 A1 eine plattenförmige Schutzvorrichtung für Pflanzen bekannt, die aus einem lignocellulosem Span- und/oder Fasermaterial gefertigt ist.

Aus der DD 00009992 U ist beispielsweise eine Baumschutzmanschette aus Kunststoff bekannt.

Es ist eine Aufgabe der vorliegenden Erfindung, ein Verfahren zur Herstellung einer rohrartigen Rundmaschenware, eine rohrartige Rundmaschenware, eine Schutzhülle, ein Verfahren zum Schutz von Bäumen sowie eine Vorrichtung zum Herstellen einer rohrartigen Rundmaschenware zu schaffen, bei denen eine verbesserte Handhabung bei optimierter Hüllenfestigkeit und Biokompatibilität geschaffen werden.

Diese und weitere Aufgaben werden gelöst durch ein Verfahren nach Anspruch 1, eine rohrartige oder rohrförmige Rundmaschenware nach Anspruch 7, eine Schutzhülle nach Anspruch 8, ein Verfahren nach Anspruch 9 sowie eine Vorrichtung nach Anspruch 11.

Vorteilhafte Weiterbildungen der Erfindung sind in den abhängigen Ansprüchen angegeben oder werden nachstehend im Zusammenhang mit der Beschreibung der Erfindungen angegeben.

Die Erfindung schließt die technische Lehre ein, dass bei einem Verfahren zur Herstellung einer als rohrartige Schutzhülse und/oder -hülle, insbesondere einer rohrartigen Baumschutzhülse und/oder -hülle, ausgebildeten Rundmaschenware, wobei die Schutzhülse bzw. die Rundmaschenware als ein Rundgestrick, ein Rundgeflecht, ein Rundgewebe und/oder ein Rundgewirk ausgebildet wird, umfassend die Schritte: Rundstricken, Rundflechten, Rundweben und/oder Rundwirken mindestens einer Hybrid-und/oder Kompositfaser, die mindestens aus einer Naturfaser und einem kompostierbaren Verfestigungsmaterial hergestellt wird, zu einem Rundgestrick, Rundgeflecht, Rundgewebe bzw. Rundgewirk und Verfestigen der Kompositfaser durch Aufschmelzen und anschließendes Abkühlen zumindest des Verfestigungsmaterials, wobei die Hybrid- und/oder Kompositfaser weiter mit einem Düngemittelmaterial hergestellt wird und/oder zumindest die Naturfaser und das kompostierbare Verfestigungsmaterial als homogene Spinnung - eine Intimspinnung - hergestellt werden und/oder dass mindestens zwei seitliche Einschnitt in die Rundmaschenware zur Erzeugung einer Lasche durchgeführt werden..

Unter einer Maschenware sind Gestricke, Geflechte, Gewebe und Gewirke zu verstehen. Entsprechend sind unter Rundmaschenware Rundgestricke, Rundgeflechte, Rundgewebe bzw. Rundgewirke zu verstehen.

Unter einem kompostierbaren Verfestigungsmaterial ist insbesondere ein Material zu verstehen, welches biologisch abbaubar ist und kompostierbar ist. Das heißt, das Material zersetzt sich auf einem Kompost bei 30°C innerhalb eines Jahres und/oder das Material zersetzt sich in einer industriellen Kompostanlage bei etwa 60°C in höchstens 12 Wochen. Die Reste bei diesem Kompostiervorgang müssen durch ein Zwei-Millimeter-Sieb passen, wobei höchstens 10 Prozent der Menge dabei zurückbleiben dürfen. Insbesondere ist ein kompostierbares Verfestigungsmaterial ein Lignin, ein PLA oder dergleichen. Die Hybrid- und/oder Kompositfaser umfasst in einer Ausführungsform das Düngemittelmaterial. In einer anderen Ausführungsform ist das Düngemittelmaterial nicht Teil der Hybridfaser. Die Hybrid- und/oder Kompositfaser kann in beiden Ausführungsformen als Intim-Spinnung ausgeführt sein. Die seitlichen Einschnitte können in beiden Fällen in die Rundmaschenware aus der Kompositfaser oder den Kompositfasern eingebracht sein.

In einer Ausführungsform der Erfindung ist vorgesehen, dass das Verfestigen und/oder Verstärken durch Verstricken, Verflechten, Verweben, bzw. Verwirken des Verfestigungsmaterials mit der Naturfaser beim Rundstricken, Rundflechten, Rundweben bzw. Rundwirken zu dem Rundgestrick, Rundgeflecht, Rundgewebe bzw. Rundgewirk erfolgt. Das Verfestigungsmaterial liegt dabei als Faser oder als mehrere Fasern vor. Der Anteil von Naturfaser(n) und Verfestigungsfaser(n) kann dabei entsprechend der Anwendung gewählt werden. Es liegt somit ein Mischgestrick, Mischgeflecht, Mischgewebe bzw. Mischgewirk aus einer Naturfaser und dem Verfestigungsmaterial vor. Bevorzugt wird eine Hybrid- und/oder Kompositfaser verstrickt. Es lassen sich auch mehrere Hybrid- und/oder Kompositfasern verstricken. Hybrid- und Kompositfaser werden im Folgenden synonym verwendet, sofern nicht ausdrücklich auf Unterschiede hingewiesen wird. Die Kompositfaser umfasst mindestens eine Naturfaser und ein kompostierbares Verfestigungsmaterial. Das Verfestigungsmaterial kann in verschiedenen Formen mit der Naturfaser zu einer Kompositfaser bereitgestellt werden. Vorzugsweise sind die Naturfaser und das Verfestigungsmaterial in einer homogenen Spinnung bereitgestellt, einer sogenannten Intimspinnung. Weiter ist bevorzugt vorgesehen, dass weiter ein Dünge(-mittel-)material bereitgestellt wird. Das Dünge(-mittel-)material wird vorzugsweise mit der Kompositfaser bereitgestellt. Dabei kann das Dünge(-mittel-)material auf beliebige Weise mit der Kompositfaser bereitgestellt werden. Beispielsweise kann das Dünge(mittel)material als Beschichtung, als Faser oder auf andere Weise bereitgestellt werden. Vorzugsweise ist das Dünge(mittel)material ein Naturdünger, ein Mineraldünger, ein organischer Dünger, ein Mehrnährstoffdünger, ein Einzelnährstoffdünger, ein Bodendünger, ein Pflanzendünger oder jeder andere beliebige Dünger sein.

Nach Herstellen einer Rundmaschenwaren aus der Kompositfaser, wird diese Verfestigt. Dies erfolgt durch Aufschmelzen und abschließendes Abkühlen des Verfestigungsmaterials. Dabei erfolgt das Aufschmelzen und Abkühlen derart, dass die anderen Materialien der Kompositfaser außer dem Verfestigen nicht wesentlich beeinträchtigt werden.

Damit die verfestigte Rundmaschenware später mittels Pflock oder dergleichen als Baumschutzhülle verwendbar ist, werden bevorzugt in das Rundgestrick zwei Einschnitte eingebracht. Die Einschnitte erfolgen bevorzugt, wenn das Rundgestrick in einer Form als doppellagiges Band vorliegt. Die Einschnitte erfolgen an einer gleichen Seiten des doppellagigen Bandes beabstandet zueinander. Bei Aufstellen und Überstülpen des Rundgestricks lässt sich die durch die Einschnitte gebildete Lasche nach innen ausformen, sodass ein Pflock durch die gebildete Lasche gesteckt werden kann, um die Rundmaschenware, beispielsweise das Rundgestrick, mit dem Pflock am / im Boden zu verankern.

Die Naturfaser kann eine beliebige Naturfaser sein. Bevorzugt ist die Naturfaser eine Flachsfaser, eine Hanffaser, eine Baumwollfaser und/oder eine Viskosefaser.

In einer weiteren Ausführungsform ist vorgesehen, dass das Verfestigen oder Verstärken durch nachträgliches Ein- oder Aufbringen des Verfestigungsmaterials auf und/oder in das Naturfaser-Rundgestrick, Naturfaser-Rundgeflecht, Naturfaser-Rundgewebe, Naturfaser-Rundgewirk - allgemein Naturfaser-Rundmaschenwareinsbesondere durch Tauchen, Extrudieren, Sprayen, Sprühen, Beschichten durchgeführt wird. Das Verfestigungsmaterial liegt hier vorzugsweise in einer flüssigen oder gasförmigen Form vor. Vorzugsweise ist das Verfestigungsmaterial auf einem erhöhten Temperaturniveau, sodass das Verfestigen oder Verstärken bei Abkühlung eintritt.

In einer anderen Ausführungsform wird die Mischmaschenware, also das Mischgestrick, das Mischgeflecht, das Mischgewebe bzw. das Mischgewirk, das heißt die Maschenware -- das Gestrick, das Geflecht, das Gewebe, das Gewirk -- aus der Naturfaser und der Verfestigungsmaterialfaser zu einer Rundmaschenware - dem Rundgestrick, Rundgeflecht, Rundgewebe, Rundgestrick - verstrickt, verflechtet, verwebt bzw. verwirkt. Die Mischrundmaschenware -- das Mischrundgestrick, das Mischrundgeflecht, das Mischrundgewebe, das Mischrundgewirk -- wird über ein Rohr, einen Stab oder dergleichen gezogen. Dabei wird die Mischrundmaschenware - - das Mischrundgestrick, Mischrundgeflecht, Mischrundgewebe, Mischrundgewirkso über das Rohr oder dergleichen gezogen, dass der Mantel der Mischrundmaschenware -- Mischrundgestrick, Mischrundgeflecht, Mischrundgewebe, Mischrundgewirk -- nicht auf einem anderen Teil des Mantels aufliegt, somit keine Doppellagigkeit aufgrund eines Aneinanderaufliegens von Mantelbereichen vorliegt. Beim Ziehen der Mischrundmaschenware -- des Mischrundgestricks, Mischrundgeflechts, Mischrundgewebes, Mischrundgewirksüber das Rohr oder dergleichen wird die Mischrundmaschenware -- das Mischrundgestrick, das Mischrundgeflecht, das Mischrundgewebe, das Mischrundgewirk -- auf einen vorbestimmten Temperaturbereich erwärmt. Der vorbestimmte Temperaturbereich sieht als untere Grenze eine Mindesttemperatur von mindestens 50°C, bevorzugt von mindestens 75°C und am meisten bevorzugt von mindestens 100°C vor. Weiter sieht der vorbestimmte Temperaturbereich als obere Grenze eine Maximaltemperatur von maximal 350°C, weiter bevorzugt von maximal 325°C und am meisten bevorzugt von maximal 300°C vor. Ein bevorzugter Temperaturbereich liegt somit bei >= 50°C und <= 300°C. In einer bevorzugten Ausführungsform liegt der Temperaturbereich um 200°C plus/minus 50°. Insbesondere ist der Temperaturbereich so ausgebildet, dass in dem Bereich das Verfestigungsmaterial schmilzt.

Die Mischrundmaschenware -- das Mischrundgestrick, Mischrundgeflecht, Mischrundgewebe, Mischrundgewirk -- verbleibt bei in dem vorbestimmten Temperaturbereich, insbesondere in dem Temperaturbereich zum zumindest teilweise Schmelzen des Verfestigungsmaterial, für eine vorbestimmte Verweildauer. Dabei wird die Mischrundmaschenware --das Mischrundgestrick, Mischrundgeflecht, Mischrundgewebe, Mischrundgewirk -- über das Rohr oder dergleichen beim Erwärmen verfahren. Insbesondere wird die Mischrundmaschenware -- das Mischrundgestrick, Mischrundgeflecht, Mischrundgewebe, Mischrundgewirk -- beim Erwärmen kontinuierlich mit einer - insbesondere konstanten - Geschwindigkeit verfahren. Das Verfahren der Mischrundmaschenware -- des Mischrundgestricks, Mischrundgeflechts, Mischrundgewebes, Mischrundgewirks -- über das Rohr oder dergleichen ist so eingestellt, dass ein bestimmter Bereich der Mischrundmaschenware -- des Mischrundgestricks, Mischrundgeflechts, Mischrundgewebes, Mischrundgewirks -- für eine vorbestimmte Zeitdauer erwärmt wird. Das Erwärmen erfolgt vorzugsweise in einem Ofen, durch den die Mischrundmaschenware -- das Mischrundgestrick, Mischrundgeflecht, Mischrundgewebe, Mischrundgewirk -- über das Rohr oder dergleichen verfahren wird. Insbesondere wird die Mischrundmaschenware -- das Mischrundgestrick, Mischrundgeflecht, Mischrundgewebe, Mischrundgewirk -- während des Verfahrens in einem Tunnelofen erwärmt. Das Rohr oder dergleichen ragt durch den Tunnelofen und ragt insbesondere über den Tunnelofen zumindest an einer Seite, bevorzugt an beiden Seiten über den Tunnelofen hervor. Die Verweildauer einer vorbestimmten Stelle der Mischrundmaschenware -- des Mischrundgestricks, Mischrundgeflechts, Mischrundgewebes, Mischrundgewirks -- im dem Temperaturbereich, der durch den Tunnelofen bereitgestellt wird, ist dabei so ausgebildet, dass die Stelle mindestens 5 Sekunden, bevorzugt mindestens 10 Sekunden und weiter bevorzugt mindestens 15 Sekunden sich in dem vorbestimmten Temperaturbereich befindet. Weiter ist die Verweildauer in dem Temperaturbereich so ausgebildet, dass sich die Stelle der Mischrundmaschenware -- des Mischrundgestricks, Mischrundgeflechts, Mischrundgewebes, Mischrundgewirks -- in dem vorbestimmten Temperaturbereich für maximal 500 Sekunden, bevorzugt maximal 450 Sekunden und weiter bevorzugt maximal 410 Sekunden befindet. Über die Verfahrgeschwindigkeit wird die Verweildauer eingestellt. Die Verfahrgeschwindigkeit kann konstant, aber auch variabel eingestellt werden.

Das Rohr oder dergleichen kann zur weiteren Temperaturregelung ausgebildet sein. Beispielsweise kann das Rohr zum weiteren Erwärmen und/oder Kühlen ausgebildet sein. In einer Ausführungsform weist das Rohr Öffnungen, insbesondere Durchgangsöffnungen auf, durch welche Luft und/oder Wärme strömen kann. So lässt sich beispielsweise in dem über den Tunnelofen hinausragenden Bereich des Rohrs mittels Luftlöchern ein Abkühlen der erwärmten Mischrundmaschenware - des Mischrundgestricks, Mischrundgeflechts, Mischrundgewebes, Mischrundgewirksrealisieren. Auch ist eine Wasserkühlung mit dem Rohr realisierbar. Hierzu sind entsprechende Kühlmittelzu- und -abflüsse vorgesehen, welche das Rohr durchlaufen.

Nach dem Erwärmen und damit Schmelzen des Verfestigungsmaterials wird die Mischrundmaschenware -- das Mischrundgestrick, Mischrundgeflecht, Mischrundgewebe, Mischrundgewirk -- wieder abgekühlt, so dass das Verfestigungsmaterial von einem geschmolzenen Zustand in einen festen Zustand gebracht wird. Das Kühlen kann aktiv, beispielsweise mittels Luft- und/oder Flüssigkeitskühlung, oder passiv, durch Verfahren durch die Umgebung, vorgenommen werden. Nach einem Abkühlen auf eine vorbestimmte Temperatur, wird die Mischrundmaschenware -- das Mischrundgestrick, Mischrundgeflecht, Mischrundgewebe, Mischrundgewirk -- auf Länge geschnitten.

Noch eine Ausführungsform sieht vor, dass das Rundstricken, Rundflechten, Rundweben, Rundwirken der Naturfaser derart erfolgt, dass die Rundmaschenware - - das Rundgestrick, Rundgeflecht, Rundgewebe, Rundgewirk-- eine Maschenweite von mindestens 2 mm, bevorzug von mindestens 3 mm und am meisten bevorzugt von mindestens 4 mm aufweist und/oder maximal eine Maschenweite von max. 8 mm, bevorzugt von max. mindestens 7 mm und am meisten bevorzugt von max. 6 mm aufweist. Vorzugsweise erfolgt das Verfestigen und/oder Verstärken derart, dass nach dem Verfestigen / Verstärken die Rohrmaschenware -- das Rohrgestrick, Rohrgeflecht, Rohrgewebe, Rohrgewirk -- noch eine Maschenweite aufweist, die um nicht mehr als 30%, bevorzugt nicht mehr als 20% und am meisten bevorzugt um nicht mehr als 10% gegenüber der Maschenweite der Rundmaschenware -- des Rundgestricks, Rundgeflechts, Rundgewebes, Rundgewirks-- eingeschränkt ist. Die Bemessung der Maschenware erfolgt auf übliche Weise durch Vergleich mit einem entsprechenden Maßstab. Beispielsweise kann ein Maßstab angelegt werden. Bei Herstellung auf einer entsprechenden Maschine kann die Maschenware durch Verändern der Parameter der Maschine verändert werden, bis die gewünschte Maschengröße erreicht ist. Gemessen werden kann die Maschengröße beispielsweise in Längs- und/oder Querrichtung der Maschenware.

Zudem ist in einer Ausführungsform vorgesehen, dass das Verfestigen derart erfolgt, dass die Maschen nach dem Verfestigen zumindest teilweise luft- und/oder lichtdurchlässig, das heißt nicht mit dem Verfestigungsmaterial vollständig zugesetzt sind. Hierzu wird die Menge an Verfestigungsmaterial entsprechend gewählt. Die Anteile an Verfestigungsmaterial zu Naturfaser lassen sich je nach Anwendungszweck wählen.

Auch ist in einer Ausführungsform vorgesehen, dass für das Verfestigen mindestens ein Parameter des Verfestigungsmaterials und/oder des Verfestigungsprozesses so eingestellt wird, dass die Maschen zumindest teilweise nicht zugesetzt werden, insbesondere dass eine Materialzufuhr, eine Viskosität des Verfestigungsmaterials, eine Faserstärke des Verfestigungsmaterials, derart eingestellt werden, dass die Maschen zumindest teilweise licht- und/oder luftdurchlässig werden. Eine geringere Materialzufuhr, ebenso wie eine geringere Viskosität und/oder auch eine geringere Verfestigungsdauer sorgen für eine geringere Zusetzung der Maschen. Im Gegensatz dazu sorgen eine höhere Materialzufuhr, eine höhere Viskosität und/oder eine höhere Verfestigungsdauer für eine höhere Zusetzung der Maschen. U.a. über diese Parameter lässt sich eine Maschenweite des NFK-Rohrgestricks einstellen.

Grundsätzlich kann die Naturfaser mit einem Bindemittel in Form eines biologisch abbaubaren Thermoplastes und/oder Harz versehen sein.

Die Rundmaschenware aus der Kompositfaser wird zumindest vor dem Erwärmen unter Zug aufgespreizt. Hierzu wird die Rundmaschenware über ein Rohr, beispielsweise mittels eines Trichters oder dergleichen, geführt und dabei aufgespreizt. In dem Aufgespreizten Zustand wird die Rundmaschenware erwärmt. Dies erfolgt vorzugsweise durch einseitiges Erwärmen, beispielsweise von einer Außenseite oder von der entgegengesetzten Rohrseite her. In einer Ausführungsform kann auch ein beidseitiges Erwärmen stattfinden, also von einer Außenseite und von der Rohrseite her. Vorzugsweise erfolgt das Erwärmen in einem Tunnelofen, durch welchen das aufgespreizte Rundgestrick über das durch den Tunnelofen verlaufende Rohr gezogen wird. Die Verfahrgeschwindigkeit oder die Zuggeschwindigkeit des Rundmaterials ist einstellbar.

Nach dem Erwärmen, bei dem das Verfestigungsmaterial aufschmilzt, wird die Rundmaschenware abgekühlt. Bei dem Abkühlvorgang erhärtet sich das aufgeschmolzenen Verfestigungsmaterial. Das Verfestigungsmaterial hat sich während des Erwärmens über die anderen Materialen der Kompositfaser verteilt. Die anderen Materialien haben einen entsprechend höheren Schmelzpunkt als das Verfestigungsmaterial. Durch die Aggregatzustandsänderung fließt das Verfestigungsmaterial entlang der nicht aufschmelzenden Materialien und verteilt sich entlang der nicht aufschmelzenden Materialien entsprechend. Das Erwärmen erfolgt derart, dass sich das Verfestigungsmaterial zwar entlang der restlichen Materialen der Kompositfaser verteilt, nicht aber anfängt, sich von der (restlichen) Kompositfaser zu lösen, beispielsweise durch Abtropfen oder dergleichen.

Sobald das Abkühlen derart erfolgt ist, dass das Verfestigungsmaterial sich wieder verfestigt hat und nicht mehr fließt, wird die Rundmaschenware geplättet, das heißt zu einem zweilagigen Band geformt. Dabei erfolgt das Plätten derart, dass die Kanten der Rundmaschenware nicht brechen, die Struktur der Rundmaschenware somit erhalten bleibt. Hierzu verfährt die verfestigte Rundmaschenware durch eine Spalt. Der Spalt kann beispielsweise durch zwei voneinander beabstandete Bleche oder Blöcke gebildet sein. Zum Einfädeln ist vorzugsweise eine Art Einlauftrichter vorgesehen. Nach Durchlauf durch den Spalt, dessen Spaltmaß einstellbar ist, liegt die verfestigte Rundmaschenware als doppellagiges Band vor. In diesem Zustand werden zwei seitliche Einschnitte in das Band vorgenommen. Die Einschnitte erfolgen von der gleichen Seite und beabstandet zueinander. Dabei wird das Band unter Spannung gehalten. Vorzugsweise werden mindestens zwei, weiter bevorzugt mindestens vier seitliche Einschnitte in das Band eingebracht. Dabei sind die ersten zwei Einschnitte und/oder die zweiten zwei Einschnitte (Einschnitt drei und vier) enger zueinander beabstandet als der zweite und der dritte Einschnitt. Die Einschnitttiefe ist geringer als die halbe Breite des doppellagigen Bandes. Vorzugsweise liegt die Einschnitttiefe im Bereich von ca. 10-40% der halben Breite des doppellagigen Bandes und lässt sich an die später zu verwendenden Abmaße des Pflocks anpassen.

Es ist somit vorgesehen, dass die Rundmaschenware aus der Hybrid- und/oder Kompositfaser zumindest vor dem Erwärmen aufgespreizt wird. Weiter ist vorgesehen, dass die Rundmaschenware nach dem Erwärmen, insbesondere nach einem zumindest Teilabkühlen zusammengedrückt wird, um ein doppellagige Bandanordnung zu erhalten. Darüber hinaus ist vorgesehen, dass die mindestens zwei seitlichen Einschnitte in die doppellagige Bandanordnung eingebracht werden. Auch ist vorgesehen, dass das Herstellen der Rundmaschenware unter Zugspannung durchgeführt wird. In einer Ausführungsform ist vorgesehen, dass das Verfestigen durch nachträgliches Ein- oder Aufbringen des Verfestigungsmaterials auf und/oder in das Naturfaser-Rundgestrick, Naturfaser-Rundgeflecht, Naturfaser Rundgewebe bzw. Rundfaser-Rundgewirk, insbesondere durch Tauchen, Extrudieren, Sprayen, Sprühen, Beschichten oder durch nachträgliches Schmelzen und Verfestigen des Verfestigungsmaterials mittels Temperaturänderungen durchgeführt wird.

Weiter schließt die Erfindung die technische Lehre ein, dass bei einer rohrartigen Rundmaschenware wie ein Rundgestrick, Rundgeflecht, Rundgewebe und/oder Rundgewirk, hergestellt nach einem hier beschriebenen Verfahren, insbesondere umfassend ein Rundgestrick, Rundgeflecht, Rundgeweben bzw. Rundgewirk aus einer Kompositfaser, die eine Naturfaser, insbesondere einer Naturfaser wie eine Flachsfaser, Hanffaser, Baumwollfaser, Viskosefaser und dergleichen sowie zumindest ein kompostierbaren Verfestigungsmaterial, insbesondere ein Harz, ein Thermoplasts, Lignin oder PLA umfasst, wobei die Naturfaser durch Aufschmelzen und Abkühlen zumindest des Verfestigungsmaterial verfestigt ist, die Kompositfaser weiter ein Düngemittelmaterial umfasst und/oder zumindest die Naturfaser und das Verfestigungsmaterial als homogene Spinnung - Intimspinnung - ausgebildet ist und/oder die Rundmaschenware mindestens eine durch zwei seitliche Einschnitte hergestellte Lasche aufweist. Die rohrartige Maschenware ist ein rohrartiges und/oder rohrförmiges Rundgestrick, Rundgeflecht, Rundgewebe, Rundgewirk oder dergleichen. Die Naturfaser ist insbesondere eine Naturfaser wie eine Flachsfaser, Hanffaser, Bauwollfaser, Viskosefaser und dergleichen. Die Rundmaschenware --das Rundgestrick, Rundgeflecht, Rundgewebe, Rundgewirk -- weist vorzugsweise eine Maschenweite von mindestens 2 mm, bevorzugt 3 mm und am meisten bevorzugt von mindestens 4 mm bis maximal 8 mm, bevorzugt 7 mm und am meisten bevorzugt von 6 mm aufweist. Die Maschenweite wird durch das Abmaß einer Masche in Längsrichtung und/oder in Breitenrichtung bestimmt. Dabei lässt sich die Maschenweite durch Anlegen eines Maßstabs in die entsprechende Richtung - längs in Richtung der Achse der Rundmaschenware oder quer, insbesondere senkrecht dazu, oder durch Voreinstellung einer entsprechenden Maschine, bestimmen. Die Rundmaschenware -- das Rundgestrick, Rundgeflecht, Rundgewebe, Rundgewirkist mittels eines kompostierbaren Verfestigungsmaterials, insbesondere mittels eines biokompostierbaren Thermoplastes und/oder eines Harzes, eines Thermoplasts, Lignin oder PLA verfestigt, sodass aus der Naturfaser-Rundmaschenware -- dem Naturfaser-Rundgestrick, -Rundgeflecht, - Rundgewebe, - Rundgewirk -- eine verstärkte und/oder verfestigte rohrartige Rundmaschenware -Rundgestrick, Rundgeflecht, Rundgewebe, Rundgewirk -- oder auch Rohrgestrick, Rohrgeflecht, Rohrgewebe, Rohrgewirk oder NFK-Rohrgestrick, NFK-Rohrgeflecht, NFK-Rohrgewebe, NFK-Rohrgewirk, allgemein NFK-Rohrmaschenware oder Rohrmaschenware, realisiert ist. Die Kompositfaser weist zumindest die Naturfaser und das Verfestigungsmaterial auf, kann aber auch die Düngemittelmaterial-Faser umfassen. Dabei sind die Naturfaser und das Verfestigungsmaterial - und ggf. die Düngemittelmaterialfaser - bevorzugt als Intim-Spinnung - eine homogene Spinnung von Naturfaser und Verfestigungsmaterial - ausgebildet.

Auch schließt die Erfindung die technische Lehre ein, dass bei einer Schutzhülle, insbesondere einer Baumschutzhülle, vorgesehen ist, dass diese eine hier beschriebene rohrartige und/oder rohrförmige Rundmaschenware -- Rundgestrick, Rundgeflecht, Rundgewebe, Rundgewirk und/oder Rohrgestrick, Rohrgeflecht, Rohrgewebe, Rohrgewirk-- umfasst. Dabei ist die Rohrmaschenware --das Rohrgestrick, Rohrgeflecht, Rohrgewebe, Rohrgewirk -- vorzugsweise nahtlos ausgebildet. Insbesondere ist die Schutzhülle als endlos Rundmaschenware hergestellt, die je nach Anwendungsfall auf Länge geschnitten wird. Die Rundmaschenware weist in einer Ausführungsform mindestens eine Lasche, bevorzugt zwei Laschen auf. Die Hybrid-und/oder Kompositfaser kann ein zusätzliches Düngemittelmaterial aufweisen. In weiteren Ausführungsformen können weitere Materialen ergänzend oder optional vorgesehen sein. Die Hybrid- und/oder Kompositfaser umfasst zumindest eine Naturfaser und eine Faser aus Verfestigungsmaterial. Dabei besteht das Mischungsverhältnis der Hybrid- und/oder Kompositfaser aus größer gleich etwa 30 Gewichtsprozent Naturfaser und kleiner gleich etwa 70 Gewichtsprozent Verfestigungsmaterial-Faser, bevorzugt von größer gleich etwa 40 Gewichtsprozent Naturfaser und kleiner gleich etwa 60 Gewichtsprozent Verfestigungsmaterial-Faser und am meisten bevorzugt von etwa 50 Gewichtsprozent Naturfaser und etwa 50 Gewichtsprozent Verfestigungsmaterial-Faser, wobei sich die Gewichtsprozente der unterschiedlichen Materialien zu 100 Gewichtsprozent addieren. In einer Ausführungsform, in der zusätzlich ein Düngemittelmaterial, beispielsweise in Form einer Faser vorgesehen ist, beträgt dessen Anteil an der Hybrid- und/oder Kompositfaser etwa mehr als 0,1 Gewichtsprozent, vorzugsweise mehr als 0,5 Gewichtsprozent und am meisten bevorzugt von etwa mehr als 1 Gewichtsprozent gegenüber den sich damit zu 100 Gewichtsprozent addierenden Gewichtsprozent der anderen Materialien. Die Anteile in Gewichtsprozent können je nach Anwendungsfall variiert werden. Die Hybrid- und/oder Kompositfaser weist eine Stärke im Bereich von etwa größer gleich 500 tex bis etwa kleiner gleich 800 tex auf.

Weiter schließt die Erfindung die technische Lehre ein, dass bei einem Verfahren zum Schutz von Bäumen, insbesondere von jungen Bäumen oder anderen zu schützenden länglichen Objekten, die Schritte umfasst sind: Überstülpen einer hier beschriebenen Schutzhülle und/oder einer hier beschriebenen rohrartigen und/oder rohrförmigen Rundmaschenware - Rundgestrick, Rundgeflecht, Rundgewebe, Rundgewirk -- über den jeweiligen Baum und/oder das zu schützende, längliche Objekt und Verankern der Schutzhülle mittels eines durch zumindest eine Lasche geführten Pflocks oder eines anderen Stützobjekts. Bevorzugt ist, dass die Schutzhülle und/oder das rohrartige Rundgestrick, Rundgeflecht, Rundgewebe bzw. Rundgewirk um den Baum gestülpt belassen wird, bis es sich automatisch biologisch zersetzt / abbaut und/oder bis es aufgeschnitten und abgenommen wird und/oder das sich bei der Zersetzung freiwerdende Düngermaterial zumindest teilweise aufgebraucht ist. Die Naturfaser und das kompostierbare Verfestigungsmittel zersetzen sich über die Zeit biologisch. Durch Hinzufügen eines Düngematerials, ist ein Entfernen der Schutzhülle nicht zwingend erforderlich, da das Düngematerial über einen längeren Zeitraum zugeführt wird. Erst nach Aufbrauch des Düngematerials wird bevorzugt das Entfernen der Schutzhülle realisiert.

Auch schließt die Erfindung die technische Lehre ein, dass bei einer Vorrichtung zum Herstellen einer hier beschriebenen rohrartigen Rundmaschenware wie einem Rundgestrick, Rundgeflecht, Rundgewebe oder Rundgewirk nach einem hier beschriebenen Verfahren, umfassend eine Rundmaschenwarenmaschine wie einer Rundstrickmaschine, eine Rundflechtmaschine, eine Rundwebmaschine bzw. ein Rundgewirkmaschine, und ein Temperiereinrichtung, wobei die Temperiereinrichtung in Verfahrrichtung der RundmaschenwarenmaschineRundgestrickmaschine, Rundflechtmachine, Rundwebemaschine bzw. Rundwirkmaschine -- nachgeschaltet ist, und durch die Temperiereinrichtung eine Spreizeinrichtung vorgesehen ist, über welche die auf der Rundmaschenwarenmaschine -- Rundgestrickmaschine, Rundflechtmaschine, Rundwebmaschine bzw. Rundgewirkmaschine -- hergestellte Mischrundmaschenware --Mischrundgestrick, Mischrundgeflecht, Mischrundgewebe bzw. Mischrundgewirk -- aus Naturfaser und Verfestigungsmaterial gezogen wird.

Die Vorrichtung umfasst eine Rundmaschenwarenmaschine wie eine Rundgestrickmaschine, Rundflechtmaschine, Rundwebmaschine oder Rundwirkmaschine. Mit der Rundmaschenwarenmaschine - Rundgestrickmaschine, Rundflechtmaschine, Rundwebmaschine, Rundwirkmaschen-- wird eine Rundmaschenware - Rundgestrick, Rundgeflecht, Rundgewebe, Rundgewirk -- aus einer Kompositfaser - insbesondere einer Kompositfaser aus mindestens einer Naturfaser und einem Verfestigungsmaterial und /oder einem weiteren Material wie einem Düngematerialgestrickt. Es wird somit eine Mischrundmaschenware - Mischrundgestrick, Mischrundgeflecht, Mischrundgewebe, Mischrundgewirkerzeugt. Die Mischrundmaschenware - Mischrundgestrick, Mischrundgeflecht, Mischrundgewebe, Mischrundgewirk -- wird über eine Spreizvorrichtung, die Bestandteil der Vorrichtung sein kann, beispielsweise ein Rohr, ein Stab oder dergleichen gezogen. Hierbei ist für ein geeignetes Aufspreizen ggf. eine Aufspreizeinrichtung wie ein sich verbeiternder Zulauf, eine Trichterform oder ähnliches vorgesehen. Dabei wird die Mischrundmaschenware -- das Mischrundgestrick, Mischrundgeflecht, Mischrundgewebe, Mischrundgewirk -- weiter unter Zug verfahren. Die Spreizvorrichtung durchläuft eine Temperiereinrichtung. Die Temperiereinrichtung ist vorzugsweise als Ofen, insbesondere als Tunnelofen ausgebildet. Dabei ragt die Spreizvorrichtung vorzugsweise auf mindestens einer Seite, insbesondere auf beiden Seiten über die Temperiereinrichtung hervor. Durch die Temperiereinrichtung wird die über die Spreizvorrichtung gezogene Mischrundmaschenware - das Mischrundgestrick, Mischrundgeflecht, Mischrundgewebe, Mischrundgewirk -- erwärmt. Das Erwärmen erfolgt so, dass das Verfestigungsmaterial zumindest teilweise schmilzt. Vorzugsweise erfolgt das Temperieren so, dass das aufschmelzende Verfestigungsmaterial nicht auf das Rohr abtropft oder sich anderweitig von dem restlichen Material der Kompositfaser trennt. Nach Durchlaufen durch die Temperiereinrichtung wird die Mischrundmaschenware -- das Mischrundgestrick, Mischrundgeflecht, Mischrundgewebe, Mischrundgewirkmit dem geschmolzenen Verfestigungsmaterial abgekühlt, sodass sich das Verfestigungsmaterial wieder verfestigt. Beim Abschmelzen verteilt sich das Verfestigungsmaterial entlang des restlichen Materials der Kompositfaser. Nach Verfestigen des Verfestigungsmaterial ist vorzugsweise eine Schneideinrichtung vorgesehen, welche ebenfalls ein Teil der Vorrichtung sein kann, mittels der die Mischrundmaschenware -- das Mischrundgestrick, Mischrundgeflecht, Mischrundgewebe, Mischrundgewirk-- auf Länge geschnitten wird. Bevorzugt ist eine weitere Schneideinrichtung vorgesehen, mit welcher Einschnitte in die Rundmaschenware eingebracht werden. Um die Einschnitte einzubringen, ist eine Plätteinrichtung vorgesehen, die ebenfalls Teil der Vorrichtung sein kann, mit der die rohrartige Schutzhülle in eine zweilagige Bandform gebracht wird. Dies kann mittels eines Spalts bewirkt werden, den die Rundmaschenware durchläuft. Der Spalt ist vorzugsweise einstellbar und wird über eine Spalteinrichtung, beispielsweise zwei voneinander beabstandete Blöcke, realisiert. Mit der Schneidvorrichtung lässt sich eine Endlosmischrundmaschenware -- ein Endlosemischrundgestrick, Endlosmischrundgeflecht, Endlosmischrundgewebe, Endlosmischrundgewirkherstellen und bedarfsweise auf Länge schneiden. Mit der weiteren Schneidvorrichtung lassen sich die Laschen einteilig mit der Schutzhülle ausbilden.

In einer Ausführungsform wird die Schutzhülle und/oder die rohrartige und/oder rohrförmige Rundmaschenware - das Rundgestrick, Rundgeflecht, Rundgewebe, Rundgewirk -- um den Baum gestülpt belassen, bis es sich mit Zeitablauf, somit von selbst oder automatisch unter den Umwelteinflüssen biologisch zersetzt / abbaut und/oder bis es aufgeschnitten und abgenommen wird.

Bei einer rohrartigen Rundmaschenware wie einem Rundgestrick, Rundgeflecht, Rundgewebe oder Rundgewirk handelt es sich um eine Rundmaschenware - Rundgestrick, Rundgeflecht, Rundgewebe, Rundgwirk -- welche gegenüber der eigentlichen Rundmaschenware - dem Rundgestrick, Rundgeflecht, Rundgewebe, Rundgewirk -- durch weitere Maßnahmen verfestigt ist, das heißt ein höhere Eigenstabilität aufweist. Rundmaschenwaren wie Rundgestricke, Rundgeflechte, Rundgewebe, Rundgewirke aus Naturfasern weisen eine vergleichsweise geringe Stabilität auf. Diese eignet sich nicht sonderlich als Schutzhülle. Bei der rohrartigen Rundmaschenware - Rundgestrick, Rundgeflecht, Rundgewebe, Rundgewirk -- ist u.a. die Eigenstabilität erhöht. Zudem weist die rohrartige Rundmaschenware - Rundgestrick, Rundgeflecht, Rundgewebe, Rundgewirk -- eine ausreichende Stabilität auf, um Schälschäden und Wildverbiss zu verhindern. Hierzu ist / wird die eigentliche Rundmaschenware - Rundgestrick, Rundgeflecht, Rundgewebe, Rundgewirk -- aus Naturfaser verfestigt. Naturfasern sind alle Fasern, die von natürlichen Quellen wie Pflanzen, Tieren oder Mineralien stammen und sich ohne weitere chemische Umwandlungsreaktionen direkt einsetzen lassen. Auch sind im Sinne der Erfindung hierunter Regeneratfasern, die auf Cellulose als Material aus nachwachsenden Rohstoffen basieren (z. B. Viskose aus Holz oder Bambus) zu verstehen. Auch relativ kurze Holzfasern sind hierunter zu fassen. Naturfasern können organischen (pflanzlich oder tierisch) oder anorganischen Ursprungs (mineralisch) sein. Bevorzugt werden. Insbesondere sind unter Naturfasern sämtliche Fasern zu verstehen, die sich für einen Baumschutz verwenden lassen, und die umweltverträglich und/oder biologisch abbaubar sind. Vorzugsweise liegt die Feinheit der Naturfaser im Bereich von 600 bis 1000 tex. In einer Ausführungsform ist/wird eine Naturfaser mittels Rundstricken, Rundflechten, Rundweben, Rundwirken zu dem Rundgestrick, Rundgeflecht, Rundgewebe, Rundgewirk - allgemein Rundmaschenware -- verstrickt, verflechtet, verwebt bzw. verwirkt. In einer anderen Ausführungsform sind/werden mehrere Naturfasern mittels Rundstricken, Rundflechten, Rundweben, Rundwirken zu dem Rundgestrick, Rundgeflecht, Rundgewebe, Rundgewirk verstrickt. Die mehreren Naturfasern können gleich oder zumindest hinsichtlich eines Parameters wie Feinheit, Material etc. unterschiedlich sein.

Aus der Kompositfaser oder den Kompositfasern wird mittels Rundstricken, Rundflechten, Rundweben, Rundwirken, vorzugsweise auf einer Rundmaschenwarenmaschine wie einer Rundstrickmaschine, Rundflechtmaschine, Rundwebmaschine, Rundwirkmaschine eine Rundmaschenware - Rundgestrick, Rundgeflecht, Rundgewebe, Rundgewirk -- hergestellt. Für den Einsatz als Schutzhülle ist die rohrartige Rundmaschenware - Rundgestrick, Rundgeflecht, Rundgewebe, Rundgewirk -- mit einer ausreichenden Maschenweite auszuführen. Die ausreichende Maschenweite ist derart ausgelegt, dass eine ausreichende Luft- und/oder Lichtzufuhr für das zu schützende Objekt, hier junge Bäume, gewährleistet ist. Zudem ist mittels ausreichend bemessener Maschenweite eine ausreichende Wärme Zu-/Abfuhr zu gewährleisten. Hierfür hat sich eine Maschenweite im Bereich von mindestens 2 mm, bevorzugt mindestens 3 mm und am meisten bevorzugt von mindestens 4 mm und von maximal 8 mm, bevorzugt von maximal 7 mm und am meisten bevorzugt von maximal 6 mm als besonders vorteilhaft herausgestellt. Die Maschenweite ist insbesondere für die noch nicht verfestigte Rundmaschenware - Rundgestrick, Rundgeflecht, Rundgewebe, Rundgewirk -- vorgesehen.

Nach Herstellen der Rundmaschenware -- des Rundgestricks, Rundgeflechts, Rundgewebes, Rundgewirks -- aus der Kompositfaser wird die Rundmaschenware-das Rundgestrick, Rundgeflecht, Rundgewebe, Rundgestricks -- verfestigt. Das Verfestigen erfolgt mit einem geeigneten Verfestigungsmaterial. Das Verfestigungsmaterial ist vorzugsweise ausgewählt aus den biokompatiblen, biologisch abbaubaren und/oder kompostierbaren Verfestigungsmaterialien. Als Verfestigungsmaterialien kommen insbesondere Lignin, PLA (Polyactide), Thermoplaste, Harze und dergleichen zum Einsatz. Insbesondere kommen kompostierbare Materialen zum Einsatz.

Um die Rundmaschenware -- das Rundgestrick, Rundgeflecht, Rundgewebe, Rundgewirk-- aus der Kompositfaser zu verfestigen, wird diesem das jeweilige Verfestigungsmaterial hinzugefügt. Das Hinzufügen kann auf verschiedene Weise erfolgen. Eine Möglichkeit besteht darin, eine Faser oder mehrere Fasern aus dem Verfestigungsmaterial herzustellen und diese Faser(n) mit der Naturfaser oder den Naturfasern zu verarbeiten -verstricken, verflechten, verweben, verwirken. Auf diese Weise wird eine Rundmaschenware - Rundgestrick, Rundgeflecht, Rundgewebe, Rundgewirk -- aus mindestens einer Naturfaser und mindestens einer Verfestigungsfaser realisiert. Auf diese Weise wird eine rohrartige und/oder rohrförmige Mischrundmaschenware -- Misch-Rundgestrick, Mischrundgeflecht, Mischrundgewebe, Mischrundgewirk -- realisiert, welche gegenüber der eigentlichen Rundmaschenware -Rundgestrick, Rundgeflecht, Rundgewebe, Rundgewirk -- aus Naturfaser stabiler ist. Die rohrartige/rohrförmige Rundmaschenware - Rundgestrick, Rundgeflecht, Rundgewebe, Rundgewirk -- kann auch kürzer als Rohrmaschenware - Rohrgestrick, Rohrgeflecht, Rohrgewebe, Rohrgewirkbezeichnet werden. Die Rohrmaschenware -Rohrgestrick, Rohrgeflecht, Rohrgewebe, Rohrgewirk -- weist eine Maschengröße auf, die entsprechend der Maschenweite der Rohrmaschenware -- des Rundgestricks, Rundgeflechts, Rundgewebes, Rundgewirks -- entspricht. Somit liegt die Maschenweite der Rohrmaschenware -- des Rohrgestricks, Rohrgeflechts, Rohrgewebes, Rohrgewirksetwas im Bereich von 2 mm bis 8 mm, 3 mm bis 7 mm oder 4 mm bis 6 mm. Es lassen sich je nach Bedarfsfall auch andere Maschenweiten einstellen, beispielweise beginnend bei 1 mm und endend bei 10 mm. Vorzugsweise ist die Kompositfaser mittels Intimspinnung - einer Spinnung mit einer homogenen Verteilung der Naturfaser und dem Verfestigungsmaterial - hergestellt.

Außer mittels Verstricken, Verflechten, Verweben, Verwirken lassen sich noch andere Möglichkeiten der Verfestigung realisieren. So kann beispielsweise das Verfestigungsmaterial in einer anderen Form vorliegen, beispielsweise in flüssiger Form. Insbesondere lässt sich das Verfestigungsmaterial während des Herstellungsvorgangs von einem Zustand - zum Beispiel fest - in einen anderen Aggregatzustand - zum Beispiel flüssig - und dann wieder in einen Ausgangszustand - zum Beispiel fest - bringen. Dies erfolgt beispielsweise durch Erwärmen der Mischrundmaschenware - Mischrundgestrick, Mischrundgeflecht, Mischrundgewebe, Mischrundgewirk -- während des Herstellungsvorgangs. Das Verfestigungsmaterial lässt sich auch mittels Eintauchen der Rundmaschenware -- des Rundgestricks, Rundgeflechts, Rundgewebes, Rundgewirks -- Besprühen, Bestreichen oder dergleichen zu der Naturfaser-Rundmaschenware -- Naturfaser-Rundgestrick, - Rundgeflecht, - Rundgewebe, - Rundgewirks-- hinzufügen. Andere Verfestigungsmöglichkeiten mit dem Verfestigungsmaterial wie Spritzgießen, Extrudieren, Beschichten etc. sind ebenfalls möglich. Bei dem Verfestigen ist darauf zu achten, dass sich die Maschen der Naturfaser-Rundmaschenware -- Naturfaser-Rundgestrick, -Rundgeflecht, - Rundgewebe, - Rundgewirks -- nicht vollständig zusetzen, sondern für eine ausreichende Luft-/Licht-Wärmezufuhr ausreichend bemessen sind. Dies lässt sich über verschiedene Parameter bei dem Verfestigungsprozess / Verfestigungsmaterial einstellen. So lässt sich beispielsweise die Dauer des Verfestigungsprozess einstellen. Die Dauer ist dabei so zu wählen, dass die Maschenweite der Naturfaser-Rundmaschenware-- Naturfaser-Rundgestricks, - Rundgeflechts, -Rundgewebes, - Rundgewirks -- sich nicht um mehr als 40%, bevorzugt nicht um mehr als 30% und am meisten bevorzugt um nicht mehr als 20% zusetzt. Auch lässt sich die Viskosität des Verfestigungsmaterials so einstellen, dass eine entsprechende Maschenweite der Rohrmaschenware - Rohrgestrick, Rohrgeflecht, Rohrgewebe, Rohrgewirk -- nach Verfestigung vorliegt. Je zähflüssiger das Verfestigungsmaterial ist, desto höher ist der Zusetzungsgrad der Maschen. Viskosität und Dauer haben gemeinsam einen Einfluss auf die Zusetzung der Maschen. Je zäher das Verfestigungsmaterial ist und je länger die Verfestigung durchgeführt wird, desto mehr werden die Maschen zugesetzt. Dauer und Viskosität sind somit aufeinander beim Verfestigen aufeinander abzustimmen. Ebenfalls eine Rolle auf die Zusetzung der Maschen spielt die Faserstärke des Verstärkungsmaterials, sofern dieses mit der Naturfaser verarbeitet, beispielsweise verstrickt, verflechtet, verwebt, verwirkt wird. Je stärker die Faser des Verstärkungsmaterials, desto höher die Zusetzung.

Über die Verfestigung lässt sich neben der Eigenstabiliät auch die Elastizität der Rohrmaschenware -- des Rohrgestricks, Rohrgeflechts, Rohrgewebes, Rohrgewirkseinstellen. Je nach Anwendungsfall liegt somit eine Rohrmaschenware - Rohrgestrick, Rohrgeflecht, Rohrgewebe, Rohrgewirk -- mit einer eingestellten Eigenstabilität und Elastizität mit entsprechender Maschenweite vor.

Für die Verfestigung lassen sich die Möglichkeiten einzeln anwenden oder auch beliebig miteinander kombinieren. Die Verfestigung wird so durchgeführt, dass eine höhere mechanische Eigenstabilität der Rohrmaschenware -Rohrgestrick, Rohrgeflecht, Rohrgewebe, Rohrgewirk -- gegenüber der Naturfaser-Rundmaschenware - Naturfaser- Rundgestrick, - Rundgeflecht, -Rundgewebe, - Rundgewirks -- bewirkt wird und eine ausreichende Maschenweite der Rohrmaschenware -- Rohrgestrick, Rohrgeflecht, Rohrgewebe, Rohrgewirkbeibehalten wird.

Die Rohrmaschenware -- Rohrgestrick, Rohrgeflecht, Rohrgewebe, Rohrgewirk -- lässt sich bei Verwendung als Baumschutzhülle über den zu schützenden Baum stülpen. Einmal um den Baum gestülpt verbleibt die Baumschutzhülle um den Baum und schützt diesen, insbesondere den Stamm vor Wildverbiss und Schälschäden. Aufgrund der verwendeten Materialen löst sich die Rohrmaschenware -- das Rohrgestrick, Rohrgeflecht, Rohrgewebe, Rohrgewirk -- nach einer vorbestimmten Zeit auf, beispielsweise nach 3-4 Jahren und wird biologisch abgebaut. Durch die ausreichend bemessene Maschenweite ist für eine ausreichend Luft-/Licht- und/oder Wärmezufuhr des Baums gesorgt. Durch die Verfestigung ist eine ausreichend hohe Stabilität gegen Wildschäden gewährleistet.

Die Baumschutzhülle ist somit als Rundmaschenware - Rundgestrick, Rundgeflecht, Rundgewebe, Rundgewirk -- aus Naturfaser ausgebildet, welches mittels eines Verfestigungsmaterials hinsichtlich seiner mechanischen Eigenschaften verfestigt ist, wobei eine Maschenweite realisiert ist, welche eine ausreichend Licht-/Luft-/Wärmedurchlässigkeit gewährleistet. Somit ist ein Baumschutz realisiert, der eine hohe Biokompatibilät aufweist und durch die Rundmaschenware -- das Rundgestrick, Rundgeflecht, Rundgewebe, Rundgewirk -- und die Verfestigung ausreichend stabil ist. Die Rundmaschenware - Rundgestrick, Rundgeflecht, Rundgewebe, Rundgewirkbzw. die Rohrmaschenware -- das Rohrgestrick, Rohrgeflecht, Rohrgewebe, Rohrgewirk -- weisen eine im Wesentlichen zylindrische Form auf und lassen sich so optimal um einen Stamm anordnen. Somit ist eine optimaler Baumschutz realisiert, der lediglich aus einer verfestigten Rundmaschenware - Rundgestrick, Rundgeflecht, Rundgewebe, Rundgewirk -- ohne weitere Bauteile besteht. Es sind keine Verschlüsse und/oder separate Versteifungselemente vorgesehen. Die Verfestigung erfolgt in einer integrierten Weise, beispielsweise durch Verstricken, Verflechten, Verweben, Verwirken, Tränken, Beschichten, Erwärmen und Abkühlen, oder dergleichen. Die Rohrmaschenware - Rohrgestrick, Rohrgeflecht, Rohrgewebe, Rohrgewirk -- ist umlaufend durchgehend ausgebildet. Die Dicke der Rohrmaschenware - Rohrgestrick, Rohrgeflecht, Rohrgewebe, Rohrgewirk -- ist relativ dünn bemessen und dessen Materialdicke oder Manteldicke beträgt im Wesentlichen weniger als 3 cm, weiter bevorzugt weniger als 2 cm und am meisten bevorzugt weniger als 1 cm. Im Unterschied zu gewebten Schläuchen bietet die Rohrmaschenware - Rohrgestrick, Rohrgeflecht, Rohrgewebe, Rohrgewirk -- eine höhere Festigkeit und eine einfachere Herstellweise. Das Verfestigen kann integriert erfolgen. Es erfolgt keine Überlappung durch die Rohrmaschenware -Rohrgestrick, Rohrgeflecht, Rohrgewebe, Rohrgewirk - - sodass eine "einlagige" Lösung realisiert ist. Der Rand der Rundmaschenware - Rundgestrick, Rundgeflecht, Rundgewebe, Rundgewirk-- lässt sich in einer Ausführungsform aufrollen, um beispielsweise eine Längenanpassung vorzunehmen oder um eine Standfläche zu erhöhen. Aufgrund der erhöhten Eigenstabilität durch das Verfestigen steht die Rohrmaschenware -- das Rohrgestrick, Rohrgeflecht, Rohrgewebe, Rohrgewirk -- selbstständig. Die Rundmaschenware - Rundgestrick, Rundgeflecht, Rundgewebe, Rundgewirk -- und/oder die Rohrmaschenware -- das Rohrgestrick, Rohrgeflecht, Rohrgewebe, Rohrgewirk -- ist in einer Ausführungsform als Endlosschlauch ausgeführt. Das Verfestigen erfolgt in einer Ausführungsform während des Herstellens - Rundstrickens, Rundflechtens, Rundwebens, Rundwirkens. In einer anderen Ausführungsform erfolgt das Verfestigen nach dem Rundstricken, Rundflechten, Rundweben, Rundwirken der Naturfaser. Um ein Zusetzen der Maschen beim Verfestigen zu verhindern, kann ein Luftstrom vorgesehen werden, der in Richtung Maschen wirkt. Dieser kann bei einem Verfestigen mittels Erwärmen (Schmelzen) und Abkühlen während und/oder nach dem Erwärmen (Schmelzen) vorgesehen werden. Auf diese Weise wird Material aus den Maschen herausgeblasen. Das Verfestigen mittels Schmelzen erfolgt derart, dass lediglich das Verfestigungsmaterial geschmolzen wird, während die Naturfaser in einem festen Zustand verbleibt. Entsprechend ist der Temperaturbereich gewählt. Vorzugsweise ist die Rohrmaschenware -- das Rohrgestrick, Rohrgeflecht, Rohrgewebe, Rohrgewirkeinteilig ausgeführt, wobei das Verfestigungsmaterial in die Naturfaser integriert ist. Die Rundmaschenware - Rundgestrick, Rundgeflecht, Rundgewebe, Rundgewirkaus Naturfaser bildet einen Naturfaser-Schlauch, genauer einen Endlos-Naturfaser-Maschenwarenschlauch -- -Rundgestrickschluch, -Rundgeflechtschlauch, - Rundgewebeschlauch, - Rundgewirkschlauch. Diese weist umfänglich keine Verbindungsstellen auf. Somit ist die Rundmaschenware -- das Rundgestrick, Rundgeflecht, Rundgewebe, Rundgewirk -- nahtlos ausgebildet. Mindestens ein Ende ist umgeschlagen oder umgestülpt, sodass keine offenen Enden hervorstehen. Um die Stabilität von einem Schlauch zu einem Rohr zu realisieren, erfolgt das Verfestigen. Das Verfestigen erfolgt derart, dass ein Verfestigungsmaterial hinzugefügt wird. Dabei kann das Verfestigungsmaterial in flüssiger oder fester Form hinzugefügt werden. In einer Ausführungsform wird das Verfestigungsmaterial auf einem höheren Temperaturniveau dem Rund- oder Schlauchgestrick hinzugefügt, sodass bei einem Abkühlen zu einem niedrigeren Temperaturniveau die Verfestigung eintritt. Bevorzugt wird zuerst eine Mischrundmaschenware - Mischrundgestrick, Mischrundgeflecht, Mischrundgewebe, Mischrundgewirk -- aus Naturfaser und Verfestigungsmaterial erzeugt. Danach erfolgt ein Erwärmen, während dem das Verfestigungsmaterial zumindest teilweise geschmolzen wird, zumindest für eine vorbestimmte Zeitdauer in einem vorbestimmten Temperaturbereich. Danach erfolgt ein Abkühlen, in dem das geschmolzene Verfestigungsmaterial wieder verfestigt wird. Das Verfestigen wird insbesondere mittels Auskühlen oder Abkühlen realisiert. Durch das Verfestigen wird der Schlauch zu einem Rohr oder rohrartiger/rohrförmiger Rundmaschenwaren - Rundgestrick, Rundgeflecht, Rundgewebe, Rundgewirk. Dabei ist der Hauptunterschied von Schlauch und Rohr durch die Flexibilität gegeben. Das Rohr ist um mindestens 5%, bevorzugt um mindestens 10% weniger flexibel, als der Schlauch. Somit besteht die Schutzhülle aus einem zu eine RohrmaschenwareRohrgestrick, Rohrgeflecht, Rohrgewebe, Rohrgewirk -- verfestigte Schlauchmaschenware - Schlauchgestrick, Schlauchgeflecht, Schlauchgewebe, Schlauchgewirk -- welches eine Maschenweite aufweist und einen nahtlosen Umfang. In einer Ausführungsform ist der Rand gegenüber dem restlichen Rohrmantel dicker ausgebildet. In einer Ausführungsform ist die Rohrmaschenware -- das Rohrgestrick, Rohrgeflecht, Rohrgewebe, Rohrgewirk -- als gestrickter, geflochtener, gewebter, gewirkter, naturfaserverstärkter Kunststoff ausgebildet. Auf diese Weise ist vorteilhaft eine Verwendung der rohartigen/rohrförmigen, verfestigten oder verstärkten Rundmaschenware - Rundgestrick, Rundgeflecht, Rundgewebe, Rundgewirk -- als Baumschutzhülle realisiert. Die Baumschutzhülle ist somit als NFK-Rohrmaschenware - Rohrgestrick, Rohrgeflecht, Rohrgewebe, Rohrgewirkausgebildet, welches eine licht-/luft- und/oder wärmedurchlässige Maschenstruktur aufweist.

Weitere die Erfindung verbessernde Maßnahmen sind in den Unteransprüchen angegeben

## Patentansprüche

1. Verfahren zur Herstellung einer als rohrartige Schutzhülse und/oder -hülle, insbesondere einer rohrartigen Baumschutzhülse und/oder -hülle, ausgebildeten Rundmaschenware, wobei die Schutzhülse bzw. die Rundmaschenware als ein Rundgestrick, ein Rundgeflecht, ein Rundgewebe und/oder ein Rundgewirk ausgebildet wird, umfassend die Schritte:
Rundstricken, Rundflechten, Rundweben und/oder Rundwirken mindestens einer Hybrid- und/oder Kompositfaser, die mindestens aus einer Naturfaser und
einem kompostierbaren Verfestigungsmaterial hergestellt wird, zu einem Rundgestrick, Rundgeflecht, Rundgewebe bzw. Rundgewirk und Verfestigen der Kompositfaser durch Aufschmelzen und anschließendes Abkühlen zumindest des Verfestigungsmaterials **dadurch gekennzeichnet, dass**
die Kompositfaser weiter mit einem Düngemittelmaterial hergestellt wird
und/oder zumindest die Naturfaser und das kompostierbare Verfestigungsmaterial als homogene Spinnung - eine Intimspinnung - hergestellt werden und/oder dass mindestens zwei seitliche Einschnitt in die Rundmaschenware zur Erzeugung einer Lasche durchgeführt werden.

2. Verfahren nach Anspruch 1, **dadurch gekennzeichnet, dass** die Rundmaschenware aus der Kompositfaser zumindest vor dem Erwärmen aufgespreizt wird.

3. Verfahren nach Anspruch 1 oder 2, **dadurch gekennzeichnet, dass** die Rundmaschenware nach dem Erwärmen, insbesondere nach einem zumindest Teilabkühlen zusammengedrückt wird, um ein doppellagige Bandanordnung zu erhalten.

4. Verfahren nach einem der vorherigen Ansprüche 1 bis 3, **dadurch gekennzeichnet, dass**
die mindestens zwei seitlichen Einschnitte in die doppellagige Bandanordnung eingebracht werden.

5. Verfahren nach einem der vorherigen Ansprüche 1 bis 4, **dadurch gekennzeichnet, dass**
das Herstellen der Rundmaschenware unter Zugspannung durchgeführt wird.

6. Verfahren nach einem der vorherigen Ansprüche 1 bis 5, **dadurch gekennzeichnet, dass**
das Verfestigen durch nachträgliches Ein- oder Aufbringen des Verfestigungsmaterials auf und/oder in das Naturfaser-Rundgestrick, Naturfaser-Rundgeflecht, Naturfaser Rundgewebe bzw. Rundfaser-Rundgewirk, insbesondere durch Tauchen, Extrudieren, Sprayen, Sprühen, Beschichten oder durch nachträgliches Schmelzen und Verfestigen des Verfestigungsmaterials mittels Temperaturänderungen durchgeführt wird.

7. Rohrartige Rundmaschenware wie ein Rundgestrick, Rundgeflecht, Rundgewebe und/oder Rundgewirk, hergestellt nach einem Verfahren gemäß einem der vorherigen Ansprüche 1 bis 6, insbesondere umfassend ein Rundgestrick, Rundgeflecht, Rundgeweben bzw. Rundgewirk aus einer Hybrid- und/oder Kompositfaser, die eine Naturfaser, insbesondere einer Naturfaser wie eine Flachsfaser, Hanffaser, Baumwollfaser, Viskosefaser und dergleichen sowie zumindest ein kompostierbaren Verfestigungsmaterial, insbesondere ein Harz, ein Thermoplasts, Lignin oder PLA umfasst, wobei die Naturfaser durch Aufschmelzen und Abkühlen zumindest des Verfestigungsmaterial verfestigt ist, **dadurch gekennzeichnet, dass**
die Kompositfaser weiter ein Düngemittelmaterial umfasst und/oder zumindest die Naturfaser und das Verfestigungsmaterial als homogene Spinnung - Intimspinnung - ausgebildet ist und/oder die Rundmaschenware mindestens eine durch zwei seitliche Einschnitte hergestellte Lasche aufweist.

8. Schutzhülle, insbesondere eine Baumschutzhülle, umfassend ein rohrartiges Rundgestrick, Rundgeflecht, Rundgewebe bzw. Rundgewirk nach Anspruch 7.

9. Verfahren zum Schutz von Bäumen, insbesondere von jungen Bäumen oder anderen zu schützenden länglichen Objekten, umfassend die Schritte: Überstülpen einer Schutzhülle nach Anspruch 8 und/oder eines rohrartigen Rundgestricks, Rundgeflechts, Rundgewebes bzw. Rundgewirks nach Anspruch 7 über den Baum und Verankern der Schutzhülle mittels eines durch zumindest eine Lasche geführten Pflocks.

10. Verfahren nach Anspruch 9, **dadurch gekennzeichnet, dass** die Schutzhülle und/oder das rohrartige Rundgestrick, Rundgeflecht, Rundgewebe bzw. Rundgewirk um den Baum gestülpt belassen wird, bis es sich automatisch biologisch zersetzt / abbaut und/oder bis es aufgeschnitten und abgenommen wird und/oder das sich bei der Zersetzung freiwerdende Düngermaterial zumindest teilweise aufgebraucht ist.

11. Vorrichtung zum Herstellen einer rohrartigen Rundmaschenware wie einem Rundgestrick, Rundgeflecht, Rundgewebe oder Rundgewirk nach Anspruch 7 nach einem Verfahren gemäß einem der Ansprüche 1 bis 6, umfassend eine Rundstrickmaschine, eine Rundflechtmaschine, eine Rundwebmaschine bzw. ein Rundgewirkmaschine und ein Temperiereinrichtung, wobei die Temperiereinrichtung in Verfahrrichtung der Rundgestrickmaschine, Rundflechtmachine, Rundwebemaschine bzw. Rundwirkmaschine nachgeschaltet ist, und durch die Temperiereinrichtung eine Spreizeinrichtung vorgesehen ist, über welche das auf der Rundgestrickmaschine, Rundflechtmaschine, Rundwebmaschine bzw. Rundgewirkmaschine hergestellte Mischrundgestrick, Mischrundgeflecht, Mischrundgewebe bzw. Mischrundgewirk aus Naturfaser und Verfestigungsmaterial gezogen wird.
